Europäisches Patentamt

European Patent Office

Office européen des brevets

(19)

(11) Veröffentlichungsnummer: **0 199 704**
**B1**

(12) **EUROPÄISCHE PATENTSCHRIFT**

(45) Veröffentlichungstag der Patentschrift:
28.02.90

(21) Anmeldenummer: 86890069.7

(22) Anmeldetag: 20.03.86

(51) Int. Cl.⁴: **H02P 7/292**

(54) **Phasenanschnitt-Steuerschaltung für Motoren.**

(30) Priorität: 16.04.85 AT 1147/85

(43) Veröffentlichungstag der Anmeldung:
29.10.86 Patentblatt 86/44

(45) Bekanntmachung des Hinweises auf die Patenterteilung:
28.02.90 Patentblatt 90/9

(84) Benannte Vertragsstaaten:
AT CH DE FR GB IT LI NL SE

(56) Entgegenhaltungen:
DE-A- 1 516 172
DE-A- 3 039 282

(73) Patentinhaber: Siemens Aktiengesellschaft Österreich, Siemensstrasse 88 - 92, A-1210 Wien(AT)

(84) Benannte Vertragsstaaten: AT

(73) Patentinhaber: Siemens Aktiengesellschaft, Wittelsbacherplatz 2, D-8000 München 2(DE)

(84) Benannte Vertragsstaaten: CH DE FR GB IT LI NL SE

(72) Erfinder: Lukas, Josef, Dipl.-Ing., Lacknergasse 6/1, A-1170 Wien(AT)
Erfinder: Nicoltsios, Grammenos, Dipl.-Ing., Klabundgasse 4/9, A-1190 Wien(AT)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist eine Phasenanschnitt-Steuerschaltung für Motoren mit einer Kommandostufe und mindestens einem Stromwandler, dessen gleichgerichtete Sekundärspannung der Istwerterfassung des Motorstromes dient und zusätzlich zur Ermittlung des Stromnulldurchganges herangezogen ist.

Bekanntlich ist zur Steuerung von Gleichstrommotoren die Kenntnis des Istwertes des Motorstromes erforderlich, da der Steuerung eine automatische Stromregelung untergeordnet ist. Bei Gleichstrommmotoren, die aus einem Wechselstromnetz mit einem durch Phasenanschnitt gewonnenen Strom gespeist werden, ist es üblich, Stromwandler vorzusehen, die primärseitig in den speisenden Wechselstromkreis eingeschaltet sind und aus deren Sekundärspannung mittels einer Gleichrichterschaltung eine den Stromistwert abbildende Größe gewonnen wird.

Für die Steuerung ist jedoch bei der Einleitung einer Stromrichtungsumkehr auch die genaue Ermittlung des Zeitpunktes der Stromlosigkeit der Thyristoren erforderlich, denn hierbei muß ein Teil der den Phasenanschnitt bewirkenden Thyristoren gesperrt und zum richtigen Zeitpunkt müssen andere, bisher gesperrte Thyristoren freigegeben werden und die Sperrung eines Thyristors kann erst beim Strom Null erfolgen.

Hierbei ergeben sich Schwierigkeiten einmal wegen der systembedingten Unempfindlichkeit bei der Nulldurchgangserfassung, wegen der Ummagnetisierungsvorgänge in den Wandlern und der Schwellwertspannungen nachgeschalteter Gleichrichter. Dies hat zur Folge, daß verhältnismäßig lange Pausenzeiten in Kauf genommen werden müssen. In der DE-A-3 039 282 ist eine Einrichtung zur Nullstromerfassung bei Umkehrstromrichtern beschrieben, bei der den in den Phasenleitern angeordneten Stromwandlern Zusatzwicklungen zugeordnet sind, die in den Stromwandlern zusätzliche magnetische Durchflutungen erzeugen, die die erwähnten Schaltzeitverzögerungen kompensieren. Diese Zusatzwicklungen sind jedoch mit Phasenschiebern zwischen zwei Phasenleitern angeschlossen und sind daher von den Strömen bzw. Spannungen jeweils zweier Phasen abhängig und somit zur genauen Erfassung des Stromnulldurchganges einer einzelnen Phase nicht gut geeignet.

Wenn der Stromistwert mit Hilfe von Stromwandlern ermittelt wird, dann ist es naheliegend, mit dessen Hilfe auch den Stromnulldurchgang festzustellen. Hierbei ergibt sich jedoch, wenn die den Stromistwert abbildende Größe durch Gleichrichtung der Stromwandler-Sekundärspannung gewonnen wird, die Schwierigkeit, daß auch der Abmagnetisierungsstrom des Stromwandlers gleichgerichtet wird und während der Zeitspanne bis zu seinem völligen Verschwinden einen Stromfluß vortäuscht. Es kann somit der Zeitpunkt des Stromnulldurchganges nicht exakt erfaßt werden, was die Betriebssicherheit beeinträchtigt.

Die Erfindung hat sich die Aufgabe gestellt, diese Verfälschung des Zeitpunktes des Stromnulldurchganges zu beseitigen und erzielt dies dadurch, daß eine den Stromistwert abbildende Gleichspannung aus der Sekundärspannung eines oder mehrerer Stromwandler durch eine Gleichrichterschaltung, bei der je ein gesteuerter Schalter unmittelbar und je ein zweiter gesteuerter Schalter über je ein Inversionsglied angeschlossen ist, gewonnen wird und einer der Stromnulldurchgangserfassung dienenden Komparatorschaltung zugeführt wird. Die gesteuerte Gleichrichtung auf der Sekundärseite des Wandlers kann somit vor einer Stromumkehr von der Kommandostufe ausgesetzt werden, worauf eine Gleichrichtung des Abmagnetisierungsstromes ausgeschlossen ist und die zeitgerechte Signalisierung des Stromnulldurchganges gewährleistet ist. Hierbei sind die gesteuerten Schalter zweckmäßig von der Steuerschaltung für den Motorstrom betätigt.

Für die Sicherheit des Betriebes der Steuerschaltung ist es wesentlich, daß jene Schalter, beispielsweise Feldeffekttransistoren, die nacheinander betätigt werden, gehindert sind, daß ihre Schaltzeiten einander übergreifen. Diese Sicherheit ist dann gegeben, wenn nach einem weiteren Merkmal der Erfindung alle gesteuerten Schalter von einer elektronischen Verriegelungsschaltung in dem Sinn überwacht sind, daß von den Schaltern gleichzeitig jeweils nur einer eingeschaltet ist.

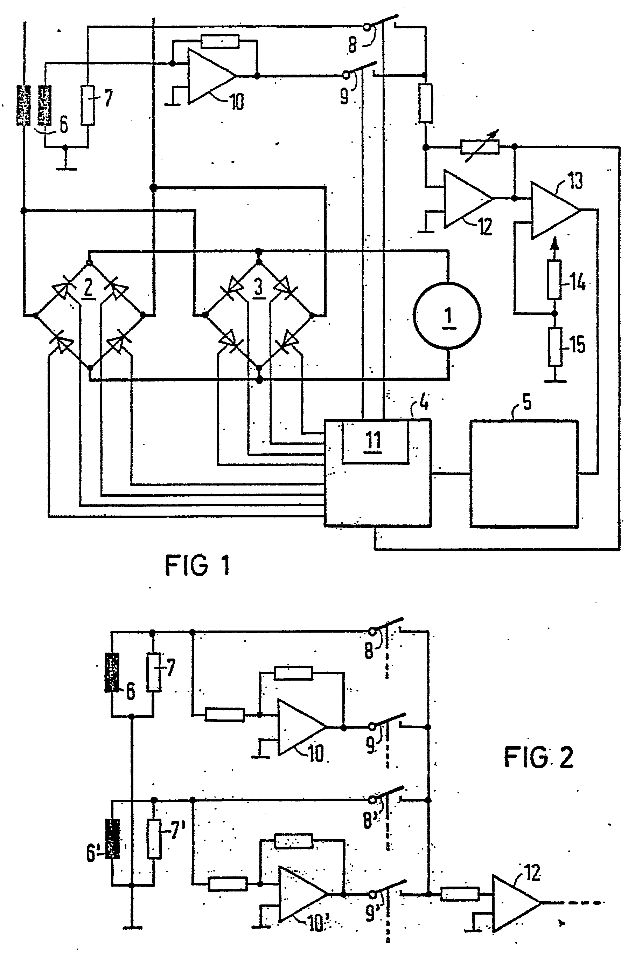

Fig. 1 der Zeichnung zeigt als Ausführungsbeispiel der Erfindung die Steuerschaltung für einen Gleichstrommotor 1, der aus einem Einphasennetz gespeist und durch Phasenanschnitt gesteuert wird. Eine entsprechende Schaltung für den Betrieb durch ein Dreiphasennetz ist in Fig. 2 dargestellt.

Bei der Ausführung nach Fig. 1 sind zur Speisung des Motors 1 mit Gleichstrom beider Stromrichtungen zwei thyristorgesteuerte Gleichrichterbrücken 2 und 3 vorgesehen. Die Thyristoren der Brücken 2 und 3 werden durch eine Steuerstufe 4 in Abhängigkeit von einer Kommandostufe 5 betätigt. Die Bemessung des Stromes für den Motor 1 erfolgt durch Phasenanschnitt mittels der Thyristoren der jeweils in Betrieb befindlichen Gleichrichterbrücke 2 oder 3. Hierzu ist jedoch eine Information über den jeweiligen Istwert des Motorstromes erforderlich, die bei der Ausführung nach Fig. 1 mittels eines in den speisenden Wechselstromkreis eingeschalteten Stromwandlers 6 gewonnen wird, dessen Sekundärspannung an einem Bürdenwiderstand 7 abgegriffen wird. Die abgegriffene Sekundär-Wechselspannung wird durch eine Gleichrichterschaltung mit gesteuerten Schaltern in eine Gleichspannung gewandelt, die einerseits für die Steuerstufe 4 den Stromistwert abbildet und anderseits den Zeitpunkt des Stromnulldurchganges exakt zu erfassen gestattet. Zur gesteuerten Gleichrichtung dienen zwei gesteuerte Schalter 8 und 9, von denen der erste unmittelbar an die Sekundärspannung des Wandlers 6 angeschlossen ist, während der Schalter 9 an ein aus einem mit seinem invertierenden Eingang an die Sekundärspannung angeschlossenen Operationsverstärker 10 bestehendes Inversionsglied angeschlossen ist. Die Kontakte 8 und 9 werden von der Steuerstufe 4 abwechselnd im Takt der Frequenz des speisenden Wechselstromes geschlossen, so daß sie jeweils die Spannung nur einer Polarität weiterschalten. Mit 11 ist eine der Steuerstufe 4 angehörende Verriegelungsstufe bezeichnet, die verhindert, daß die beiden Kontakte 8 und 9 jemals gleichzeitig angeschlossen sind. Die durch die Steuerung der Kontakte 8 und 9 gewonnene Gleichspannung ist dem Eingang eines Impedanzwandlers 12 zugeführt, der aus einem rückgekoppelten Operationsverstärker besteht. Vom Ausgang des Impedanzwandlers 12 wird die den Stromistwert abbildende Gleichspannung abgenommen und der Steuerstufe 4 zugeführt. Der Ausgang des Impedanzwandlers 12 führt zu einem weiteren Operationsverstärker 13, der als Komparator dient und dessen nichtinvertierender Eingang an den Mittenabgriff eines Spannungsteilers 14, 15 geschaltet ist, mit dessen Hilfe der Einsatzpunkt des Operationsverstärsrs 13 festgelegt wird. Vom Ausgang des Operationsverstärkers 13 wird bei jedem Stromnulldurchgang ein Impuls abgegeben, der der Kommandostufe 5 zur weiteren Auswertung im Falle einer Stromrichtungsumkehr zugeleitet wird.

Fig. 2 zeigt die Schaltung zur gesteuerten Gleichrichtung der Sekundärspannungen zweier Stromwandler 6, 6' die primärseitig in zwei Phasen eines den Motor speisenden Drehstromnetzes geschaltet sind und deren Sekundärspannungen an den zugeordneten Bürdenwiderständen 7, 7' abgegriffen werden. Auch hier ist an jeden Stromwandler 6, 6' je ein gesteuerter Schalter 8 bzw. 8' unmittelbar und je ein zweiter gesteuerter Schalter 9 bzw. 9' über je ein Inversionsglied 10 bzw. 10¹ angeschlossen. Ebenso wie bei der Ausführung nach Fig. 1 werden die von den Schaltern 8, 8', 9 und 9' durchgeschalteten Spannungen einem Impedanzwandler 12 mit nachgeschaltetem Komparator zugeführt, der in analoger Weise den Stromnulldurchgang mit einem Ausgangsimpuls kennzeichnet. Auch bei dieser Schaltung ist analog zur Schaltung 11 der Fig. 1 eine elektronische Verriegelungsschaltung vorzusehen, die aus vier Kippstufen aufgebaut ist und gewährleistet, daß von den Schaltern 8, 8', 9 und 9' gleichzeitig jeweils nur einer eingeschaltet sein kann.

**Patentansprüche**

1. Phasenanschnitt-Steuerschaltung für Motoren mit einer Kommandostufe (5) und mindestens einem Stromwandler (6, 6'), dessen gleichgerichtete Sekundärspannung der Istwerterfassung des Motorstromes dient und zusätzlich zur Ermittlung des Stromnulldurchganges herangezogen ist, dadurch gekennzeichnet, daß eine den Stromistwert abbildende Gleichspannung aus der Sekundärspannung eines oder mehrerer Stromwandler (6, 6') durch eine Gleichrichterschaltung, bei der je ein gesteuerter Schalter (8, 8') unmittelbar und je ein zweiter gesteuerter Schalter (9, 9') über je ein Inversionsglied (10, 10') angeschlossen ist, gewonnen wird und einer der Stromnulldurchgangserfassung dienenden Komparatorschaltung (13, 14, 15) zugeführt wird.

2. Schaltung nach Anspruch 1, dadurch gekennzeichnet, daß die gesteuerten Schalter (8, 9, 8', 9') von der Steuerschaltung (4) für den Motorstrom betätigt sind.

3. Schaltung nach Anspruch 1 oder 2, dadurch gekennzeichnet, daß alle gesteuerten Schalter (8, 9, 8', 9') von einer elektronischen Verriegelungsschaltung (11) in dem Sinn überwacht ist, daß von den Schaltern (8, 9, 8', 9') gleichzeitig jeweils nur einer eingeschaltet ist.

**Claims**

1. Phase-angle control circuit for motors having a commando stage (5) and at least one current transformer (6, 6') of which the rectified secondary voltage serves for the actual value acquisition of the motor current and in addition is used for determining the current crossover, characterized in that a direct voltage which maps the current actual value is gained from the secondary voltage of one or a plurality of current transformers (6, 6') by a rectifier circuit, in which each controlled switch (8, 8') is connected directly and each second controlled switch (9, 9') is connected via an inversion member (10, 10'), and is fed to a comparator circuit (13, 14, 15) which serves for detecting the current crossover.

2. Circuit according to Claim 1, characterized in that the controlled switches (8, 9, 8', 9') are activated by the control circuit (4) for the motor current.

3. Circuit according to Claim 1 or 2, characterized in that all the controlled circuits (8, 9, 8', 9') are monitored by an electronic locking circuit (11) in such a way that in each case only one of the switches (8, 9, 8', 9') is switched on at any one time.

**Revendications**

1. Circuit de commande à découpage de phase pour moteurs comportant un étage (5) de délivrance d'instructions et au moins un transformateur d'intensité (6, 6'), dont la tension secondaire redressée sert à déterminer la valeur instantanée du courant du moteur et est utilisée en outre pour détecter le passage du courant par la valeur nulle, caractérisé par le fait qu'une tension continue représentant la valeur instantanée du courant est obtenue à partir de la tension secondaire d'un ou de plusieurs transformateurs d'intensité (6, 6') au moyen d'un circuit redresseur, dans lequel respectivement un interrupteur commandé (8, 8') est raccordé directement et respectivement un second interrupteur commandé (9, 9') est raccordé par l'intermédiaire d'un circuit inverseur respectif (10, 10'), et est envoyée à un circuit comparateur (13, 14, 15) utilisé pour détecter le passage du courant par la valeur nulle.

2. Circuit suivant la revendication 1, caractérisé par le fait que les interrupteurs commandés (8, 9, 8', 9') sont actionnés par le circuit (4) de commande du courant du moteur.

3. Circuit suivant la revendication 1 ou 2, caractérisé par le fait que tous les interrupteurs commandés (8, 9, 8', 9') sont contrôlés par un circuit de verrouillage électronique (11) de manière que seul l'un des interrupteurs (8, 9, 8', 9') est fermé à un instant donné.

FIG 1

FIG 2